# EUROPEAN PATENT APPLICATION

(11) **EP 2 530 899 A1**
(43) Date of publication of application: **05.12.2012**
(21) Application number: 11789209.1
(22) Date of filing: 31.05.2011
(51) Int. Cl.: H04L 29/06

(54) **METHOD AND NODE FOR OBTAINING THE CONTENT AND CONTENT NETWORK**

(30) Priority: 19.10.2010 CN 201010515911
(71) Applicant: Huawei Technologies Co., Ltd., Shenzhen, Guangdong 518129 (CN)
(72) Inventor: SHI, Guangyu, Shenzhen Guangdong 518129 (CN); WANG, Guoqiang, Shenzhen Guangdong 518129 (CN); XIE, Haiyong, Shenzhen Guangdong 518129 (CN); FAN, Lingyuan, Shenzhen Guangdong 518129 (CN)
(74) Representative: Kreuz, Georg Maria
(86) International application number: PCT/CN2011/075010
(87) International publication number: WO 2011/150830

(57) **Abstract**

The present invention discloses a method and node for acquiring content and a content network, and is related to the field of communications. The method includes: receiving a content request, where the content request at least includes an identifier of requested content; determining whether the content corresponding to the identifier can be acquired locally; if yes, acquired the content corresponding to the identifier locally; otherwise, searching, according to the identifier, a name resolution system for a target node that stores the identifier, and acquiring the content corresponding to the identifier from the target node; where the name resolution system comprises a multilevel DHT and a global content resolution structure, and the global content resolution structure supports name aggregation and longest matching search. The node includes a content proxy module and a content acquisition module. The content network includes a node for acquiring content and a transmission network. According to the present invention, a CONA platform is constructed by adopting a distributed solution; by introducing an optimization policy, the efficiency of content distribution and the network security are improved, saves network investment cost, so that the network is more adapted to the rapid growth of the content.

## Description

### FIELD OF THE INVENTION

The present invention relates to the field of communications, and in particular, to a method and node for acquiring content and a content network.

### BACKGROUND OF THE INVENTION

After 40 years of development since the invention of the Internet technology, at current the Internet features multiple elements, for example, Web application, multimedia audio and video application, mobility, and hacker attack. The sustained advancement of these elements also brings unprecedented challenge to the Internet. In particular, with the rapid expansion of the Internet scale and the increasing popularity of high definition videos/pictures, the data volume transmitted on the Internet sees a soaring speed of growth in recent years. How to acquire content efficiently from the Internet becomes a subject attracting increasing attention.

The Internet according to the prior art is based on the host architecture, where any computer connected to the Internet is called a host, and every host has one unique IP (Internet Protocol, IP) address. During the acquisition of the content, a host that needs to be connected is selected through an IP address, and transmission of an IP data packet corresponding to the transmitted content is realized through the IP protocol.

Due to the explosion of the transmitted content on the Internet, when the Internet transmits the content based on the IP protocol, many clients establish sessions to the host where the content is located to acquire the content, causing the low efficiency of content distribution and the congestion of a source server and the Internet. To avoid the network congestion, bandwidth needs to be increasingly increased and a network device needs to be upgraded, which still increases the network investment cost. Moreover, a hacker may paralyze the network by sending a large number of requests for content to the same host; therefore, security defects exist in the current network architecture, which cannot adapt to the rapid growth of content.

### SUMMARY OF THE INVENTION

To make a network adapt to the rapid growth of content, embodiments of the present invention provide a method and node for acquiring content and a content network. The technical solutions are as follows:

In one aspect, an embodiment of the present invention provides a method for acquiring content, where the method includes the following:
receiving a content request, where the content request at least includes an identifier of requested content;
determining whether the content corresponding to the identifier can be acquired locally; if yes, acquiring the content corresponding to the identifier locally; otherwise,
searching, according to the identifier, a name resolution system for a target node that stores the content corresponding to the identifier, and acquiring the content corresponding to the identifier from the target node;
where the name resolution system includes a multilevel distributed hash table DHT and a global content resolution structure, and the global content resolution structure supports name aggregation and longest matching search.

In another aspect, an embodiment of the present invention provides a node for acquiring content, where the node includes:
a content proxy module, configured to receive a content request, where the content request at least includes an identifier of requested content; determine whether the content corresponding to the identifier can be acquired locally; if yes, acquire the content corresponding to the identifier locally; otherwise, forward the content request to a content acquisition module; and
the content acquisition module, configured to receive the content request forwarded by the content proxy module, search, according to the identifier, a name resolution system for a target node that stores the content corresponding to the identifier, and acquire the content corresponding to the identifier from the target node; where the name resolution system includes a multilevel distributed hash table DHT and a global content resolution structure, and the global content resolution structure supports name aggregation and longest matching search.

In still another aspect, an embodiment of the present invention further provides a content network, where the network includes a node for acquiring content and a transmission network.

The node for acquiring content is configured to receive a content request, where the content request at least includes an identifier of requested content; determine whether the content corresponding to the identifier can be acquired locally; if yes, acquire the content corresponding to the identifier locally; otherwise, search, according to the identifier, a name resolution system for a target node that stores the content corresponding to the identifier, and acquire the content corresponding to the identifier from the target node; and send the content corresponding to the identifier to a client through the transmission network;
where the name resolution system includes a multilevel distributed hash table DHT and a global content resolution structure, and the global content resolution structure supports name aggregation and longest matching search.

Under the network architecture according to the embodiments of the present invention, the content is not stored in a specific node. When the client is to acquire certain content, the client does not acquire it from a specific node, but searches for the content locally. If there is no such content in the local, the client searches the DHT for a content storage location list corresponding to the identifier of the content and acquires the corresponding target node in the content storage location list to acquire the content. By adopting the method according to embodiments of the present invention, network congestion caused by a situation in which many clients acquire certain content at the same time is avoided. Meanwhile, the efficiency of content distribution is improved and the waste on the investment cost for upgrading a network device is reduced. A case in which a hacker paralyzes a network by sending a large number of content requests to the same node is prevented, and network security is improved.

### BRIEF DESCRIPTION OF THE DRAWINGS

To make the technical solutions of the present invention clearer, the accompanying drawings for illustrating the embodiments of the present invention are briefly described below. Apparently, the accompanying drawings are only about some embodiments of the present invention, and persons of ordinary skill in the art may derive other drawings from such accompanying drawings without any creative effort.

FIG. 1 is a schematic structural diagram of node distribution in a content network according to an embodiment of the present invention;

FIG. 2 is a flowchart of a method for acquiring content according to Embodiment 1 of the present invention;

FIG. 3 is a flowchart of a method for acquiring content according to Embodiment 2 of the present invention;

FIG. 4 is a flowchart of a method for registering a name according to Embodiment 2 of the present invention;

FIG. 5 is a flowchart of a method for acquiring a policy according to Embodiment 2 of the present invention;

FIG. 6 is a schematic structural diagram of a content network having all functions according to Embodiment 3, Embodiment 4 and Embodiment 5.

FIG. 7 is a schematic structural diagram of a content proxy module according to Embodiment 3 of the present invention;

FIG. 8 is a schematic structural diagram of a content acquisition module according to Embodiment 3 of the present invention;

FIG. 9 is a schematic structural diagram of a first name resolution unit according to Embodiment 3 of the present invention;

FIG. 10 is a schematic structural diagram of a second name resolution unit according to Embodiment 3 of the present invention; and

FIG. 11 is a schematic structural diagram of a content routing unit according to Embodiment 3 of the present invention.

### DETAILED DESCRIPTION OF THE EMBODIMENTS

To make the objectives, technical solutions, and advantages of the present invention clearer, the following describes the embodiments of the present invention with reference to the accompanying drawings.

According to an embodiments of the present invention, the network architecture that implements perception, storage, routing and distribution services on content is constructed and is called CONA (Content-Oriented Network Architecture, content-oriented network architecture), and nodes on the network architecture are called CONA nodes.

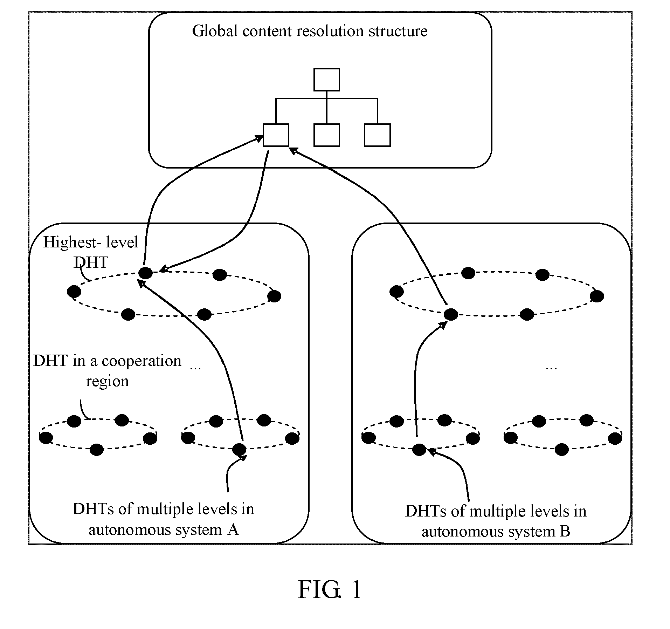

FIG. 1 is a schematic structural diagram of node distribution in a content network, and multiple nodes constitute an AS (Autonomous System, autonomous system). In each AS, a multilevel DHT (Distributed Hash Table, distributed hash table) exists, and each level of DHT corresponds to a different level of network infrastructure, for example, a DSLAM (Digital Subscriber Line Acquire Multiplexer, digital subscriber line acquire multiplexer) device layer, an Ethernet switch layer and a border router layer. Nodes corresponding to each level of DHT constitute at least one cooperation region. A cooperation region refers to a region where storage resources may work collaboratively to form a larger logic storage resource. Each cooperation region contains several nodes among which a node having a DHT index storage function is an index node. At least one index node exists in each cooperation region and DHTs in a cooperation region are dispersedly stored on the index nodes to form a whole DHT. The DHTs of the cooperation region include resolution records that are corresponding to the content stored on all nodes of the local cooperation region and a cooperation region corresponding to a next level of DHT, where the resolution records include a name of content, a location list of a node where the corresponding content is located, metadata, a signature, and TTL (Time to Live, time to live). A cross-AS adopts a global content resolution structure, where the global content resolution structure may be a CREX (Content Resolution Exchange Point, content resolution exchange point) tree or one type of global DHTs. The resolution records in the CREX tree or a global DHT aggregate the content belonging to the same AS, and the CREX tree or the global DHT is stored in a global name resolution node.

### Embodiment 1

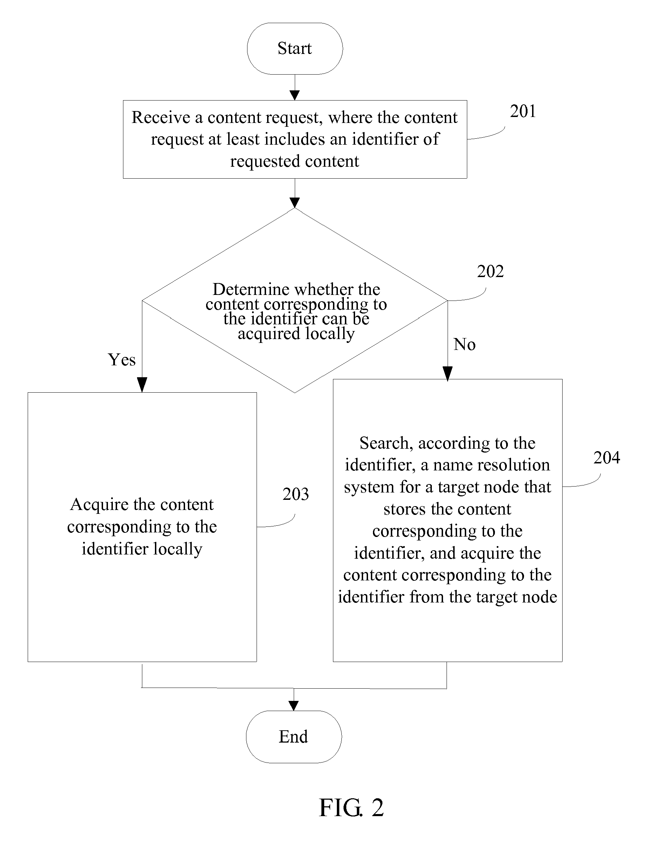

An embodiment of the present invention provides a method for acquiring content; referring to FIG. 2, the method includes the following:

201: Receive a content request, where the content request at least includes an identifier of requested content.

202: Determine whether the content corresponding to the identifier can be acquired locally; if yes, perform step 203; otherwise, perform step 204.

203: Acquire the content corresponding to the identifier locally and end the process.

204: Search, according to the identifier, a name resolution system for a target node that stores the content corresponding to the identifier, and acquire the content corresponding to the identifier from the target node; then end the process.

The name resolution system includes a multilevel DHT and a global content resolution structure and the global content resolution structure supports name aggregation and longest matching search.

According to the technical solution provided in this embodiment of the present invention, the content is not stored in a specific node. When a client is to acquire certain content, the client does not acquire it from a specific node, but searches for the content in a local cache. If there is no such content in the local cache, the client searches the DHT for a content storage location list corresponding to the identifier of the content and acquires the corresponding target node in the content storage location list to acquire the content. By adopting the method according to this embodiment of the present invention, network congestion caused by a situation in which many clients acquire certain content at the same time is avoided. Meanwhile, the efficiency of content distribution is improved and the waste on the investment cost for upgrading a network device is reduced. A case in which a hacker paralyzes the network by sending a large number of content requests to the same node is prevented, and network security is improved.

### Embodiment 2

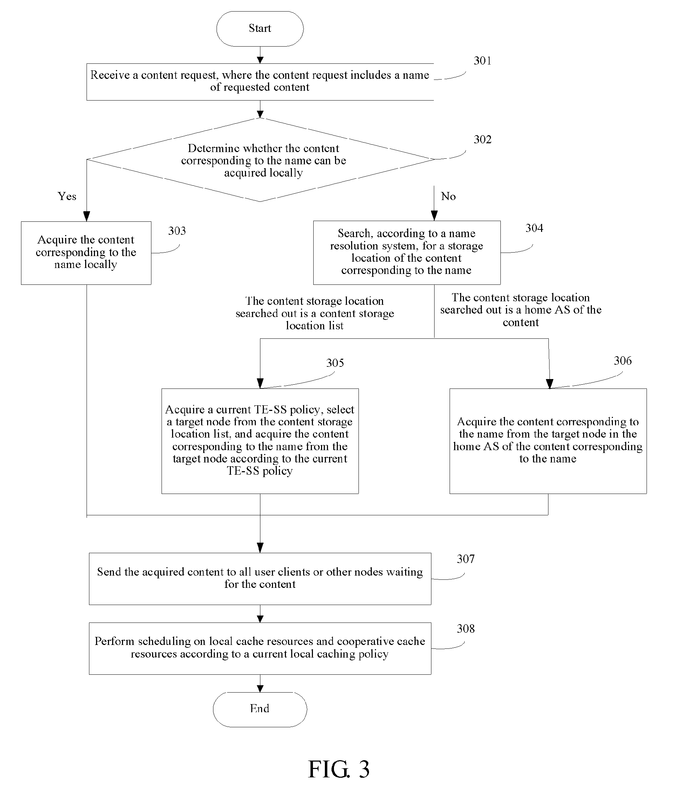

An embodiment of the present invention provides a method for acquiring content; referring to FIG. 3, the method process specifically includes the following:

301: Receive a content request, where the content request at least includes a name of requested content.

Specifically, a node receives a content request from a user client or another node, where the content request at least includes an identifier of the content that needs to be acquired, and the identifier may be, for example, a name, a flag, and a code of the content.

In this embodiment of the present invention, the node is a node in CONA, that is, a CONA node; the identifier in the requested content is described by taking the name of the content as an example, but is not limited hereto.

302: Determine whether the content corresponding to the name can be locally acquired; if yes, perform step 303; otherwise, perform step 304.

303: Acquire the content corresponding to the name locally, and perform step 307;
after the node receives the content request, acquire the name of the content from the content request, and determine whether the content corresponding to the name is stored in a local cache, that is, search, according to the name, a cache of this node to determine whether the content corresponding to the name exists. If the content exists, acquire the content corresponding to the name from the cache of this node;
if the content does not exist, determine whether the local is acquiring the content corresponding to the name, that is, check whether the name exists in a content information table that is being acquired by the node. If the name exists, wait for the local to acquire the content; if the name does not exist, perform step 304.

The content information table that is being acquired includes the name of the content that is being acquired by this node. If the content request that is subsequently received is a repeated request for the same content, the name of the content can be found in the content information table that is being acquired. Therefore, there is no need to acquire the content again, but to wait to respond together after the content is returned at a previous request. Through the aggregation of content requests, when many clients send the same content request to a certain node, subsequent requests may not be repeatedly processed, thereby effectively preventing the DDoS (Distributed Denial of Service, distributed denial of service) and flash crowd (Flash Crowd).

Content storage in this node includes permanent storage and caching. The caching in this node may include local caching and cooperative caching. The local caching and cooperative caching are scheduled according to a local caching policy acquired by integrating a cooperative caching global policy with local information. The cooperative caching is to construct a cooperative distributed caching system by organizing the storage capacity of all nodes in a cooperation region, to improve the overall cache hit rate and content distribution efficiency of the cooperation region.

304: Search, according to a name resolution system, for a storage location of the content corresponding to the name.

The name resolution system includes a multilevel DHT and a global content resolution structure, and the global content resolution structure supports name aggregation and longest matching search.

Specifically, the multilevel DTH is searched for a content storage location list corresponding to the name according to the name.

Firstly, a current DHT is searched to determine whether a resolution record corresponding to the name exists, where an initial state of the current DHT is a local DHT where the node is located and a subsequent state is a DHT that is being searched currently. If the resolution record corresponding to the name exists in the current DHT, the content storage location list in the resolution record corresponding to the name is acquired and a name searching result is returned, where the result includes information, such as the content storage location list corresponding to the name and a data signature. The content storage location list may include one or more pieces of information of the location of the content corresponding to the name.

If no resolution record corresponding to the name exists in the current DHT, and the current DHT is not a highest-level DHT in a local AS, an upper-level DHT in the local AS is searched for the name; if the name exists in the upper-level DHT, a name searching result is returned. If the name does not exist in the upper-level DHT, an even upper-level of DHT is searched until the content storage location list in the resolution record corresponding to the name is acquired. In this case, the content storage location searched out is the content storage location list, and the content is in the local AS. Then, perform step 305.

If no resolution record corresponding to the name exists in the current DHT, and the current DHT is the highest-level DHT in the local AS, the global content resolution structure is searched for a home AS of the content corresponding to the identifier, that is, the global content resolution structure is searched to determine whether the home AS of the content corresponding to the name exists. If the home AS does not exist, search failure is returned; if the home AS exists, the home AS of the content corresponding to the name, including an ID (Identity, identity number) of the AS is acquired and a gateway node ID of the home AS of the content may also be acquired at the same time. In this case, the content storage location searched out is the home AS of the content, and the content is not in the local AS. Then, perform step 306.

305: When the content is in the local AS, that is, the content storage location list in the resolution record corresponding to the name is searched out in the local AS, acquire a current TE-SS (Traffic Engineering - Server Select, traffic engineering - server select) policy, select a target node from the content storage location list according to the current TE-SS policy, acquire the content corresponding to the name from the target node according to the current TE-SS policy, and perform step 307.

Specifically, the target node and a transmission requirement ratio of each target node are selected from the content storage location list according to an SS policy in the current TE-SS policy, and then a transmission path to acquire the content from each target node is dynamically selected according to a TE policy in the current TE-SS policy.

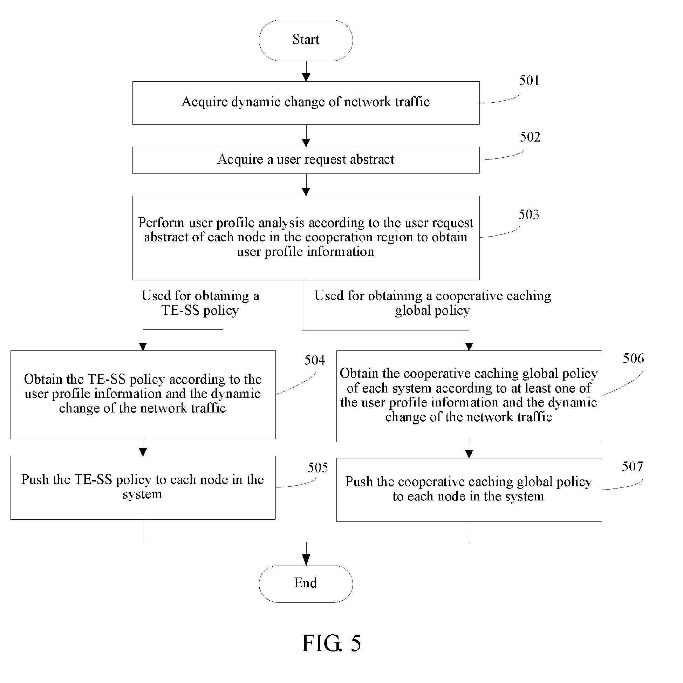

It should be noted that the current TE-SS policy is acquired in advance according to user profile information and dynamic change of network traffic. Steps 501 to 505 in FIG. 5 provide a detailed description.

306: When the content is not in the local AS, acquire the content corresponding to the name from the target node in the home AS of the content corresponding to the name, and perform step 307.

Specifically, the content request is forwarded to the AS according to the ID of the home AS of the content corresponding to the name, and the content request may also be forwarded to a gateway node of the AS according to the gateway node ID of the AS. After the gateway node acquires the content corresponding to the name from the target node of the current AS, the content corresponding to the name is directly acquired from the gateway node. If the gateway node does not acquire the content, search failure is returned. If there are multiple gateway nodes in the home AS of the content corresponding to the name, multiple gateway nodes may be selected according to a routing policy and the content request is forwarded to them simultaneously.

In the above searching process, cross-level name search may be directly initiated by a node that currently processes the request, and may also be initiated through a gateway node.

In step 304 to step 306, two manners for searching out, according to the name, the target node that stores the content corresponding to the name in the name resolution system and acquiring the content corresponding to the name from the target node are described. In one manner, the content searched out is in the local AS, while in the other manner, the content searched out is not in the local AS, and needs to be searched for in another AS region. The optimal manner is to search the local AS according to the identifier; then search another AS if it is not found; or another manner is to search directly in the local AS or to search all ASs directly through the name resolution system.

307: Send the acquired content to all user clients or other nodes waiting for the content.

When this node is sending the content, differences between transmission technologies may be hidden by adapting and optimizing different bearing technologies of a transport layer, such as IP, Ethernet (Ethernet), MPLS (Multi-Protocol Label Switching, multi-protocol label switching), fiber (Fiber) or wireless (Wireless), to provide a uniform transmission interface for the node, so as to complete tasks, such as fragmentation, reorganization, and reordering between the content and the transport layer packets or frames of the transport layer. For example, for a metropolitan area network, the CONA may directly employ the Ethernet to perform transmission, and perform optimization in view of the characteristics of the Ethernet to address a scalability issue, so as to maximize the efficiency of using a network by the CONA.

Further, when sending the content, the node also performs topological perception on a bearer network and controls a transmission path. For example, the node completes dynamic detection on the topology of the bearer network and traffic information by extending BGP (Border Gateway Protocol, border gateway protocol), IS-IS (Intermediate System to Intermediate System Routing Protocol, intermediate system to intermediate system routing protocol) or another protocol, and performs transmission control on the content through a path selected according to the TE-SS policy.

308: After sending the content to the user client or another node, schedule local cache resources and cooperative cache resources according to a current local caching policy; then end the process.

Specifically, the scheduling the local cache resources and cooperative cache resources includes allocating the space of a local cache and cooperative cache, selecting a location for placing a content copy, replacing the copy, and so on. The content copy refers to the content stored in a cache after the node acquires required content according to the request of the user client.

The acquisition of the local caching policy includes: acquiring the cooperative caching global policy and the local information and generating the local caching policy by integrating the current cooperative caching global policy with the local information. The current cooperative caching global policy is acquired by the CONA in advance according to at least one of the user profile information and the dynamic change of the network traffic. Steps 501 to 503 and 506 to 507 in FIG. 5 provide detailed descriptions.

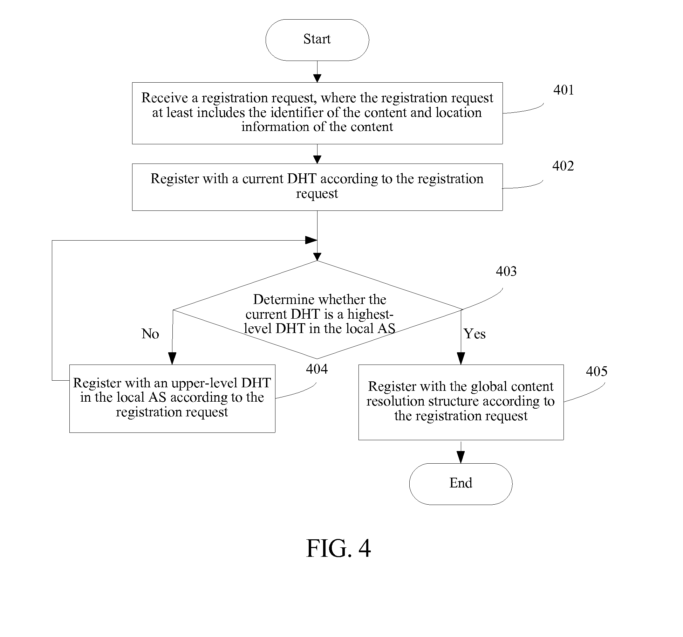

When a user releases content or when a CONA node caches the content, the content needs to be registered with a name resolution system. Referring to FIG. 4, the specific registration method is as follows:

401: Receive a registration request, where the registration request at least includes an identifier of content and location information of the content;

A node receives the registration request, where the registration request may be from a user client or a node: When a user initiatively uploads certain content, a client of the user may send a registration request to a certain node; when a user acquires certain content through a certain node, the node may send a registration request.

Specifically, the identifier in the registration request may be, for example, a name, a flag, and a code of the content. In this embodiment of the present invention, the identifier of the content is described by taking the name of the content as an example, but is not limited hereto. The registration request may further include a data signature and other information. When the content is registered with the DHT of a cooperation region where this node is located, the location information of the content may be the location information of this node, for example, a node ID. When the content is registered with an upper-level DHT, the location information of the content may be the location information of the home cooperation region of the content, for example, a cooperation region ID. When the content is registered with a global content resolution structure, the location information of the content may be the ID of a gateway via which the content is acquired or the ID of the home AS of the content.

402: Register with a current DHT according to the registration request.

An initial state of the current DHT is the local DHT of the node, that is, the DHT of the cooperation region where the node is located, and a subsequent state is a DHT that is being currently registered with.

Specifically, the DHT of the cooperation region where the local is located is searched to determine whether a resolution record corresponding to the name of the content exists.

If the resolution record corresponding to the name of the content exists in the DHT of the cooperation region where the node is located, the content storage location list in the resolution record is updated, that is, the location information of this node is updated in the content storage location list in the resolution record. The registration ends.

Otherwise, a resolution record corresponding to the name of the content is added, that is, the name of the content and the location information of this node are added into the DHT, and step 403 is performed.

The resolution record includes the name and the content storage location list corresponding to the name, and may further include a data signature and other information.

403: Determine whether the current DHT is the highest-level DHT in a local AS; if no, perform step 404; otherwise, perform step 405.

404: Register with an upper-level DHT in the local AS according to the registration request, and return to step 403.

If the resolution record of the content already exists in the DHT of this level, the content storage location list in the resolution record is updated, that is, location information of the cooperation region where the node sending the registration request is located is updated in the content storage location list in the resolution record.

Otherwise, the resolution record of the content is added, that is, the name and the location information of the cooperation region where the node sending the registration request is located is added to the upper-level DHT, and step 403 is repeated.

In this step, the node sending the registration request is the node described in step 402.

405: Register with the global content resolution structure according to the registration request, and end the process.

If the resolution record of the content already exists in the global content resolution structure, the content storage location list in the resolution record is updated, that is, location information of an AS where the node sending the registration request is located or the ID of a gateway via which the content is acquired is updated in the content storage location list in the resolution record. In this case, the registration is completed.

Otherwise, the resolution record of the content is added, that is, the name and the location information of the AS where the node sending the registration request is located or the ID of the gateway via which the content is acquired is added into the global content resolution structure.

The global content resolution structure adopts structured name space with an aggregation feature. When names of a batch of content have the same prefix and are published in the same region (for example, the same AS), it is only necessary to publish one record in the global content resolution structure by using the prefix of the names. For example, the pieces of content "www.huawei.com/pic/p1.jpg",..., and "www.huawei.com/pic/pn.jpg" have the same prefix "www.huawei.com/pic/" and are stored in the same AS, and then they may be aggregated into a resolution record with the name "www.huawei.com/pic/" in the global content resolution structure. The aggregation feature greatly improves scalability of the global content resolution structure. Moreover, the global content resolution structure also supports longest matching search. If two resolution records from different ASs, namely, "www. huawei.com/" and "www.huawei.com/pic/", exist in the global content resolution structure, when the content "www.huawei.com/pic/p1.jpg" is resolved, "www.huawei.com/pic/" may be found.

This embodiment of the present invention does not specifically limit the location information stored in the content storage location list, and multiple forms may exist according to different deployment schemes. For example, in a multilevel DHT, the location information may be the ID of the node that stores the content, the ID of the home cooperation region of the content, or the ID of the gateway via which the content is acquired. While, in the global content resolution structure, the location information may be the ID of the node that stores the content, the ID of the gateway via which the content is acquired, or the ID of the home AS of the content.

In addition, a global navigation device in a CONA network may acquire a TE-SS policy and cooperative caching global policy of each system according to user profile information and dynamic change of network traffic, push the policies to each node in a system, and apply the policies to content routing and copy replacement of each node, so as to achieve the objectives of optimal network traffic and high efficiency of content distribution. This global navigation device may be located on a certain node or may be an independent device. Referring to FIG. 5, the specific steps for acquiring a TE-SS policy and a cooperative caching global policy are as follows:

501: Acquire dynamic change of network traffic.

A global navigation device regularly collects the dynamic topology of a bearer network in a cooperation region, where the dynamic topology of the bearer network includes the dynamic change of the network traffic.

Specifically, when the dynamic topology of the bearer network in the cooperation region is collected, it may be collected through a routing protocol, for example, OSPF (Open Shortest Path First, open shortest path first) or IS-IS, or the dynamic topology of the bearer network may be collected through each node distributed in the cooperation region.

502: Acquire a user request abstract.

Specifically, each node in the cooperation region receives the content request sent by a user client, acquires a user request abstract of each node in the cooperation region according to the content request, and sends the user request abstract to the global navigation device.

The content request sent by the user client includes the name of the content that needs to be acquired. A node summarizes content requests, such as, classifying content requests sent by different user clients and collecting access statistics on different content requests to acquire the user request abstract, where the user request abstract includes, but is not limited to, the name of the content, information about the cooperation region and the access statistics.

503: Perform user profile analysis according to the user request abstract of each node in the cooperation region to acquire user profile information; perform step 504 when the user profile information is used for acquiring a TE-SS policy; perform step 506 when the user profile information is used for acquiring a cooperative caching global policy.

Specifically, the global navigation device performs the user profile analysis according to the user request abstract of each node in the cooperation region to acquire the user profile information.

The user profile analysis (User Profile Analysis) refers to: analyzing the profile of the access history of a user, predicting the access preference of the user for specific content according to the user profile information that is obtained according to an analysis result, and acquiring the personal preference of the user according to the access preference for specific content. For example, through the analysis on history access data of user A, it is found out that the user A prefers to access golf, basketball and sports news, and therefore the personal preference of the user A is sports.

Prediction methods commonly used include memory based collaborative filtering (Memory Based Collaborative Filtering) and model based collaborative filtering (Model Based Collaborative Filtering). For the memory based collaborative filtering, the access preference of a user for specific content is predicted by calculating the similarity among users and the comments of other users on the content. For the model based collaborative filtering, a probability model is established for a user first, a parameter corresponding to the probability model of the user is acquired based on the history access data of the user and by adopting the statistical inference and Bayesian learning method; and with this user model, the specific content is predicted according to the parameter, to acquire the access preference of the user for the specific content.

This embodiment of the present invention does not specifically limit the method for user profile analysis, and the method may be the memory based collaborative filtering, the model based collaborative filtering, or another method.

504: Acquire the TE-SS policy according to the user profile information and the dynamic change of the network traffic.

Specifically, the user profile information and the dynamic change of the network traffic are used as input, and the TE-SS policy is regularly calculated by adopting a TE-SS joint optimization method (for example, changing IP routing).

The TE-SS joint optimization method is to make use of the cooperative game theory to realize the cooperative game for the optimization of both TE and SS, so that both the problem of the optimal routing of the network traffic and the problem of the high efficiency of content distribution are solved, and the global optimization of system performance is achieved. A typical TE-SS joint optimization method is to build the COST (Cooperative Server selection and Traffic engineering, cooperative server selection and traffic engineering) of the TE-SS by using the NBS (Nash Bargaining Solution, nash bargaining solution). By using the dual decomposition theory, the COST decomposes an initial joint optimization problem into two sub optimization problems that are similar to the TE and SS, and a main optimization problem. The two sub problems are correlated through a common dual variable, and the main problem is to continuously update a related dual variable to make a system approach an optimal solution. In this embodiment of the present invention, joint optimization may adopt the COST method, but other methods are not excluded, so this embodiment of the present invention does not impose limitation thereon.

505: Push the TE-SS policy to each node in the system, and end the process.

Each node stores the TE-SS policy in a TE-SS policy library and applies the TE-SS policy in a subsequent service process. Dynamic optimization routing is performed for the service request and the target node in the request is selected; when there are multiple selected target nodes, the transmission requirement ratio of each target node is determined.

506: Acquire a cooperative caching global policy according to at least one of the user profile information and the dynamic change of the network traffic.

Specifically, the user profile information or the dynamic change of the network traffic is used as input or both of them are used as input, and a cooperative caching global policy of each system is calculated by adopting a cooperative caching method. The cooperative caching method commonly used is to build, based on the statistical prediction of content popularity, an optimization problem model with minimum network transmission cost, and to address this optimization problem through the heuristic algorithm to acquire copy placement and replacement policies that are closest to the optimal. In this embodiment of the present invention, the copy placement and replacement policies for cooperative caching may adopt the above method, but other methods are not excluded.

507: Push the cooperative caching global policy to each node in the system, and end the process.

Each node generates a local caching policy by integrating the cooperative caching global policy with the local information, and applies the local caching policy in the subsequent service process, so that each node in the system contributes a part of cache resources, and the cache resources of the nodes cooperate with each other to form a shared virtual cache pool.

The above steps may be divided into four groups; step 501 belongs to a first group, responsible for collecting topology. Steps 502 and 503 belong to a second group, responsible for user profile analysis. Steps 504 and 505 belong to a third group, responsible for the calculation, pushing and application of the TE-SS policy. Steps 540 and 507 belong to a fourth group, responsible for the calculation, pushing and application of the cooperative caching global policy. Each group of steps may be executed regularly, such as regularly collecting the topology, or each group of steps may be triggered by an event. Each group of steps may be cut down according to deployment, such as individually cutting down the fourth group or the third group. No order is involved with regard to the first and the second group and with regard to the third and fourth group. In this embodiment, an example that step 501 is firstly executed is taken for illustration.

The technical solution provided in this embodiment of the present invention makes full use of the advanced distributed computing and optimization decomposition theory, builds the network architecture that performs perception, storage, routing and distribution on the content, and uses cross-layer joint optimization or other technologies, to solve problems that the existing Internet of the host-based model is facing. In this way, a new generation network that is highly scalable and efficient, and content storage/distribution centric is provided.

Under the network architecture according to this embodiment of the present invention, the content is not stored in a specific node. When the client is to acquire certain content, the client does not acquire it from a specific node, but searches for the content in a local cache. If there is no such content in the local cache, the client searches the DHT for the content storage location list corresponding to the identifier of the content and acquires the corresponding target node in the content storage location list to acquire the content. By adopting the method according to this embodiment of the present invention, network congestion caused by a situation in which many clients acquire certain content at the same time is avoided. Meanwhile, the efficiency of content distribution is improved and waste on the investment cost for upgrading a network device is reduced. A case in which a hacker paralyzes the network by sending a large number of content requests to the same node is prevented, and network security is improved.

Other than a case in which each node stores all DHTs, DHTs in a cooperation region are dispersedly stored by multiple nodes in the cooperation region; therefore, when the content explodes, the storage pressure of each node is alleviated and the processing capability of the node is improved, having distributed and scalable features.

Because a cooperative distributed caching system is constructed by organizing the storage capacity of all nodes in the cooperation region, the acquisition of the content is not limited to the cache of a single node, thereby improving storage scalability. By employing the local caching policy generated by integrating the current cooperative caching global policy with the local information, the scheduling is performed on local cache resources and cooperative cache resources, thereby improving the overall cache hit rate and the efficiency of content distribution in the cooperation region.

The target node is selected from the content storage location list according to the SS policy in the current TE-SS policy, and dynamic optimization routing is performed according to the TE policy in the current TE-SS policy, so that the user client can acquire the content from an optimal node through an optimal path.

Because of the adoption of the structured name space with the aggregation feature, the system scalability is greatly improved.

### Embodiment 3

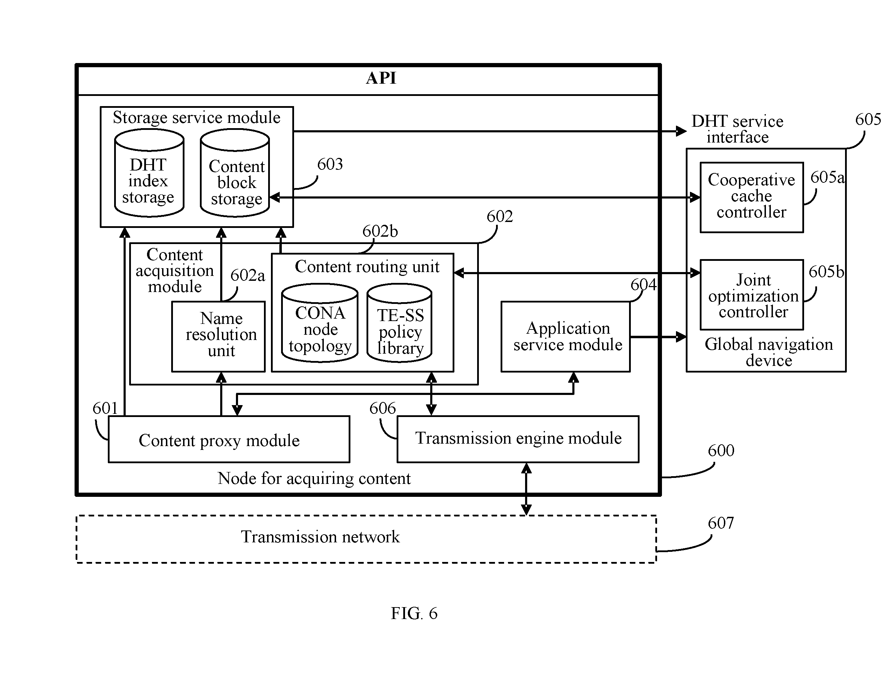

Referring to FIG. 6, an embodiment of the present invention provides a node 600 for acquiring content, where the node includes:
a content proxy module 601, configured to receive a content request, where the content request at least includes an identifier of requested content; determine whether the content corresponding to the identifier can be acquired locally; if yes, acquire the content corresponding to the identifier locally; otherwise, forward the content request to a content acquisition module 602; and
the content acquisition module 602, configured to receive the content request forwarded by the content proxy module 601; search, according to the identifier, a name resolution system for a target node that stores the content corresponding to the identifier; and acquire the content corresponding to the identifier from the target node. The name resolution system includes a multilevel DHT and a global content resolution structure, and the global content resolution structure supports name aggregation and longest matching search.

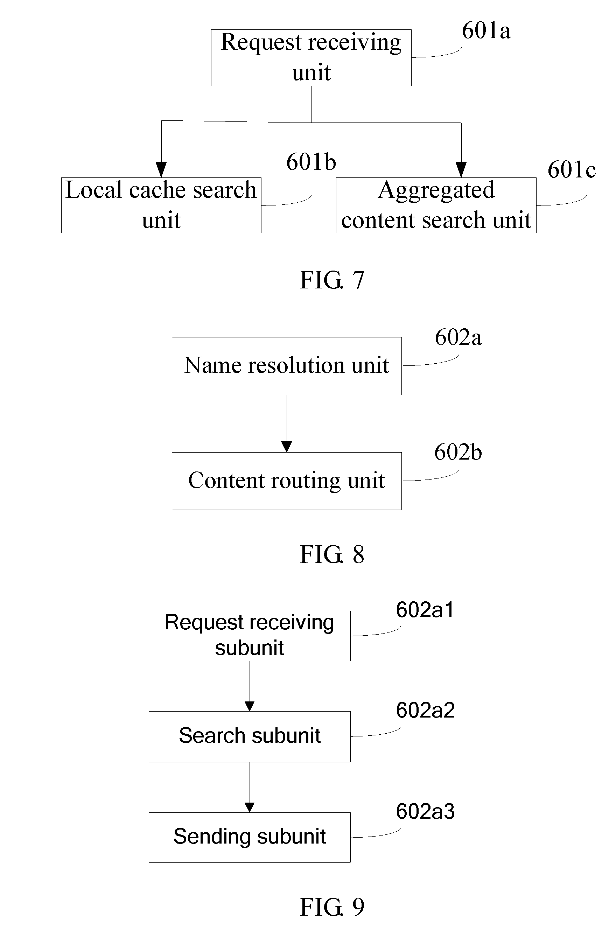

Referring to FIG 7, the content proxy module 601 specifically includes a request receiving unit 601a and at least one of a local cache search unit 601b and an aggregated content search unit 601c, where:
the request receiving unit 601 a is configured to receive the content request, where the content request at least includes the identifier of the requested content, and send the content request to at least one of the local cache search unit 601 b and the aggregated content search unit 60 1 c;
the local cache search unit 601b is configured to receive the content request sent by the request receiving unit 601 a, and determine whether the content corresponding to the identifier is cached in a local cache; if yes, acquire the content from the local cache; otherwise, forward the content request to the content acquisition module 602; and
the aggregated content search unit 601c is configured to receive the content request sent by the local cache search unit 601a, and determine whether the local is acquiring the content corresponding to the identifier; if yes, acquire the content corresponding to the identifier after the local acquires the content; otherwise, forward the content request to the content acquisition module 602.

Referring to FIG. 8, the content acquisition module 602 specifically includes:
a name resolution unit 602a, configured to receive the content request sent by the content proxy module 601, search, according to the DHT, for a content storage location list corresponding to the identifier, and send the content storage location list to a content routing unit 602b; and
the content routing unit 602b, configured to receive the content storage location list sent by the name resolution unit 602a, select the target node from the content storage location list according to a current traffic engineering - server selection TE-SS policy, and acquire the content corresponding to the identifier from the target node.

Referring to FIG. 9, the name resolution unit 602a specifically includes:
a request receiving subunit 602a1, configured to receive the content request sent by the content proxy module 601;
a search subunit 602a2, configured to search a current DHT to determine whether a resolution record corresponding to the identifier exists; if the resolution record exists, acquire the content storage location list in the resolution record corresponding to the identifier; if the resolution record does not exist and the current DHT is not a highest-level DHT in a local AS, search an upper-level DHT in the local AS until the content storage location list in the resolution record corresponding to the identifier is acquired; and
a sending subunit 602a3, configured to send the content storage location list to the content routing unit 602b.

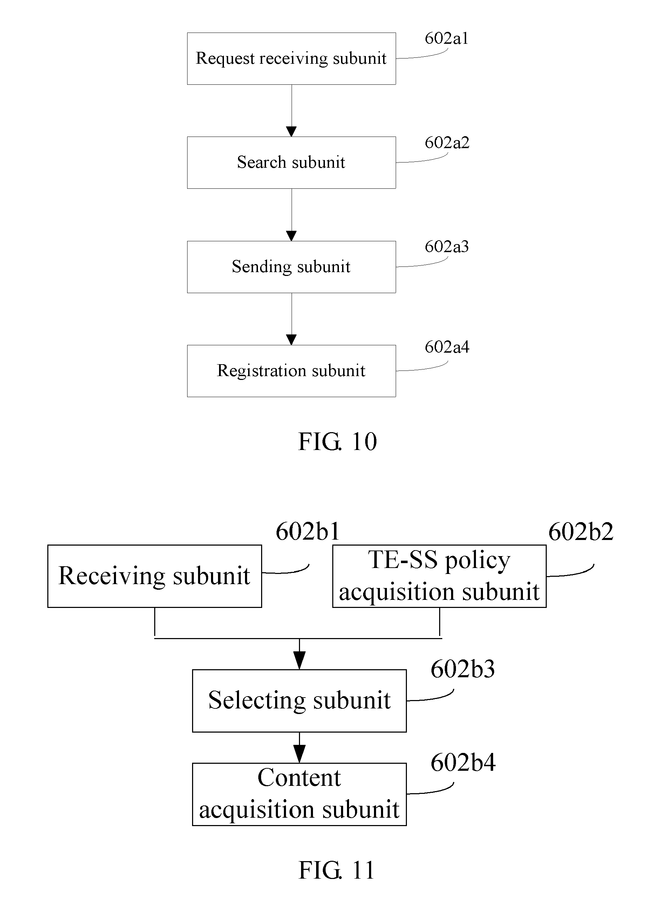

Moreover, referring to FIG. 10, the name resolution unit 602a further includes:
a registration subunit 602a4, configured to receive a registration request, where the registration request at least includes the identifier of the content and location information of the content; search the current DHT to determine whether a resolution record corresponding to the identifier exists; if the resolution record exists, update the content storage location list in the resolution record corresponding to the identifier; otherwise, add a resolution record including the identifier and the location information of the content into the DHT, and determine whether the current DHT is the highest-level DHT in the local AS; if no, register with an upper-level DHT in the local AS; and if yes, register with the global content resolution structure.
Referring to FIG. 11, the content routing unit 602b provided in this embodiment of the present invention specifically includes:
a receiving subunit 602b1, configured to receive the content storage location list sent by the name resolution unit 602a and send the content storage location list to a selection subunit 602b3;
a traffic engineering - server selection TE-SS policy acquisition subunit 602b2, configured to acquire the current TE-SS policy and send the current TE-SS policy to the selection subunit 602b3;
the selection subunit 602b3, configured to receive the content storage location list sent by the receiving subunit 602b1 and the current TE-SS policy sent by the TE-SS policy acquisition subunit 602b2, select a target node from the content storage location list according to the current TE-SS policy, and send information about the target node to a content acquisition subunit 602b4; and
the content acquisition subunit 602b4, configured to receive the information about the target node sent by the selection subunit 602b3, and acquire the content corresponding to the identifier from the target node according to the current TE-SS policy.

Meanwhile, the content acquisition subunit 602b4 is specifically configured to:
if no resolution record corresponding to the identifier exists in the current DHT, and the current DHT is the highest-level DHT in the local AS, search the global content resolution structure for a home AS of the content corresponding to the identifier, and acquire the content corresponding to the identifier from the target node in the AS.

Furthermore, the node provided in this embodiment of the present invention further includes a storage service module 603, configured to acquire a cooperative caching global policy and local information, acquire a local caching policy according to the cooperative caching global policy and the local information, and cache the acquired content according to the local caching policy.

Furthermore, the node provided in this embodiment of the present invention further includes an application service module 604, configured to acquire a content request of a user, acquire a user request abstract according to the content request, and send the user request abstract to a global navigation device 605.

Besides the above modules, the node provided in this embodiment of the present invention further includes the global navigation device 605, where the global navigation device 605 includes at least one of a cooperative cache controller 605a and a joint optimization controller 605b.

The cooperative cache controller 605a is configured to acquire the user request abstract sent by the application service module 604, acquire user profile information according to the user request abstract, and acquire a cooperative caching global policy according to the user profile information. Alternatively, the cooperative cache controller 605a is configured to acquire dynamic change of network traffic, and acquire a cooperative caching global policy according to the dynamic change of the network traffic. Alternatively, the cooperative cache controller 605a is configured to acquire the user request abstract sent by the application service module 604 and dynamic change of network traffic, acquire user profile information according to the user request abstract, and acquire a cooperative caching global policy according to the user profile information and the dynamic change of the network traffic.

The joint optimization controller 605b is configured to acquire the dynamic change of the network traffic and the user request abstract that is sent by the application service module 604, acquire the user profile information according to the user request abstract, and acquire the TE-SS policy according to the user profile information and the dynamic change of the network traffic.

The technical solution provided in this embodiment of the present invention makes full use of the advanced distributed computing and optimization decomposition theory, builds the network architecture that performs perception, storage, routing and distribution on the content, and uses cross-layer joint optimization or other technologies, to solve problems that the existing Internet of the host-based model is facing. In this way, a new generation network that is highly scalable and efficient, and content storage/distribution centric is provided.

Under the network architecture according to this embodiment of the present invention, the content is not stored in a specific node. When the client is to acquire certain content, the client does not acquire it from a specific node, but searches for the content in a local cache. If there is no such content in the local cache, the client searches the DHT for the content storage location list corresponding to the identifier of the content and acquires the corresponding target node in the content storage location list to acquire the content. By adopting the method according to this embodiment of the present invention, network congestion caused by a situation in which many clients acquire certain content at the same time is avoided. Meanwhile, the efficiency of content distribution is improved and waste on the investment cost for upgrading a network device is reduced. A case in which a hacker paralyzes the network by sending a large number of content requests to the same node is prevented, and network security is improved.

Other than a case in which each node stores all DHTs, DHTs in a cooperation region are dispersedly stored by multiple nodes in the cooperation region; therefore, when the content explodes, the storage pressure of each node is alleviated, having distributed and scalable features.

Because a cooperative distributed caching system is constructed by organizing the storage capacity of all nodes in the cooperation region, the acquisition of the content is not limited to the cache of a single node, thereby improving storage scalability. By employing the local caching policy generated by integrating the current cooperative caching global policy with the local information, the scheduling is performed on local cache resources and cooperative cache resources, thereby improving the overall cache hit rate and the efficiency of content distribution in the cooperation region.

The target node is selected from the content storage location list according to the SS policy in the current TE-SS policy, and dynamic optimization routing is performed according to the TE policy in the current TE-SS policy, so that the user client can acquire the content from an optimal node through an optimal path.

Because of the adoption of a structured name space with an aggregation feature, the system scalability is greatly improved.

### Embodiment 4

This embodiment of the present invention provides a content network. Referring to FIG. 6, the network includes a node 600 for acquiring content and a transmission network 607.

The node 600 for acquiring content is configured to receive a content request, where the content request at least includes an identifier of requested content; determine whether the content corresponding to the identifier can be acquired locally; if yes, acquire the content corresponding to the identifier locally; otherwise, search, according to the identifier, a name resolution system for a target node that stores the content corresponding to the identifier, and acquire the content corresponding to the identifier from the target node; and send the content corresponding to the identifier to a client through the transmission network 607;
where the name resolution system includes a multilevel DHT and a global content resolution structure, and the global content resolution structure supports name aggregation and longest matching search.

Specifically, when the node 600 for acquiring content is configured to determine whether the content corresponding to the identifier can be acquired locally; and if yes, acquire the content corresponding to the identifier locally, the node 600 for acquiring content is specifically configured to determine whether the content corresponding to the identifier is stored in a local cache; if yes, acquire the content from the local cache; if no, determine whether the local is acquiring the content corresponding to the identifier, and if yes, acquire the content corresponding to the identifier after the local acquires the content.

When the node 600 for acquiring content is configured to search, according to the identifier, the name resolution system for the target node that stores the content corresponding to the identifier, the node 600 for acquiring content is specifically configured to search, according to the multilevel DHT, for a content storage location list corresponding to the identifier, and select the target node in the content storage location list according to a current TE-SS policy.

When the node 600 for acquiring content is configured to search, according to the multilevel DHT, for the content storage location list corresponding to the identifier, the node 600 for acquiring content is specifically configured to search a local DHT to determine whether a resolution record corresponding to the identifier exists; if the resolution record exists, acquire the content storage location list in the resolution record corresponding to the identifier; if the resolution record corresponding to the identifier does not exist in the current DHT and the current DHT is not a highest-level DHT in a local AS, search an upper-level DHT in the local AS until the content storage location list in the resolution record corresponding to the identifier is acquired.

The node 600 for acquiring content is further configured to receive a registration request, where the registration request at least includes the identifier of the content and location information of the content; search a local DHT to determine whether a resolution record corresponding to the identifier exists; if the resolution record exists, update the content storage location list in the resolution record corresponding to the identifier; otherwise, add a resolution record including the identifier and the location information of the content into the DHT, and determine whether the current DHT is the highest-level DHT in the local autonomous system AS; if no, register with the upper-level DHT in the local AS; if yes, register with the global content resolution structure.

Furthermore, when the node 600 for acquiring content is configured to select the target node from the content storage location list according to the current TE-SS policy, the node 600 for acquiring content is specifically configured to acquire the current TE-SS policy, and select the target node from the content storage location list according to the current TE-SS policy; and
when the node 600 for acquiring content is configured to acquire the content corresponding to the identifier from the target node, the node 600 for acquiring content is specifically configured to acquire the content corresponding to the identifier from the target node according to the current TE-SS policy.

When the node 600 for acquiring content is configured to search, according to the identifier, the name resolution system for the target node that stores the content corresponding to the identifier, and acquire the content corresponding to the identifier from the target node, the node 600 for acquiring content is specifically configured to search the global content resolution structure for a home autonomous system AS of the content corresponding to the identifier, and acquire the content corresponding to the identifier from the target node in the AS.

After the node 600 for acquiring content is configured to acquire the content corresponding to the identifier from the target node, the node 600 for acquiring content is further configured to acquire a cooperative caching global policy and local information, acquire a local caching policy according to the cooperative caching global policy and the local information, and cache the content according to the local caching policy.

In addition, the node 600 for acquiring content is further configured to acquire a content request of a user, acquire a user request abstract according to the content request, and send the user request abstract to a global navigation device 605.

The node 600 for acquiring content provided in this embodiment of the present invention further includes the global navigation device 605.

The global navigation device 605 is configured to acquire the user request abstract, acquire user profile information according to the user request abstract, and acquire a cooperative caching global policy according to the user profile information.

Or, the global navigation device 605 is configured to acquire dynamic change of the network traffic, and acquire a cooperative caching global policy according to the dynamic change of the network traffic.

Or, the global navigation device 605 is configured to acquire the user request abstract and dynamic change of network traffic, acquire user profile information according to the user request abstract, and acquire a cooperative caching global policy according to the user profile information and the dynamic change of the network traffic.

Or, the global navigation device 605 is configured to acquire dynamic change of network traffic and the user request abstract, acquire user profile information according to the user request abstract, and acquire the TE-SS policy according to the user profile information and the dynamic change of the network traffic.

The global navigation device 605 may be arranged on the node 600 for acquiring content or may be an independent device.

The technical solution provided in this embodiment of the present invention makes full use of the advanced distributed computing and optimization decomposition theory, builds the network architecture that performs perception, storage, routing and distribution on the content, and uses cross-layer joint optimization or other technologies, to solve problems that the existing Internet of the host-based model is facing. In this way, a new generation network that is highly scalable and efficient, and content storage/distribution centric is provided.

Under the network architecture according to this embodiment of the present invention, the content is not stored in a specific node. When the client is to acquire certain content, of the client does not acquire it from a specific node, but searches for the content in a local cache. If there is no such content in the local cache, the client searches the DHT for the content storage location list corresponding to the identifier of the content and acquires the corresponding target node in the content storage location list to acquire the content. By adopting the method according to this embodiment of the present invention, network congestion caused by a situation in which many clients acquire certain content at the same time is avoided. Meanwhile, the efficiency of content distribution is improved and waste on the investment cost for upgrading a network device is reduced. A case in which a hacker paralyzes the network by sending a large number of content requests to the same node is prevented, and the network security is improved.

Other than a case in which each node stores all DHTs, DHTs in a cooperation region are dispersedly stored by multiple nodes in the cooperation region; therefore, when the content explodes, the storage pressure of each node is alleviated, having distributed and scalable features.

Because a cooperative distributed caching system is constructed by organizing the storage capacity of all nodes in the cooperation region, the acquisition of the content is not limited to the cache of a single node.

### Embodiment 5

In order to make the implementation of the present invention clearer, this embodiment of the present invention provides a detailed content network. Referring to FIG. 6, the content network includes a node 600 for acquiring content and a transmission network 607. The node 600 for acquiring content sends acquired content to a client through the transmission network 607.

The node 600 for acquiring content includes the following modules and units.

1. A content proxy module 601, which specifically includes the following functions:

User access management: which includes user attachment management and mobility management, and is to complete user authentication, policy management, allocation of location flags, and other tasks. Serving as a bridge between a user and a CONA network, it publishes/acquires content for the user by interacting with other nodes. The content proxy module 601 is generally deployed at the edge of the network, for example, a DSLAM device.

Traffic management: linking each function module to form a complete process for processing a content request. It is configured to receive the content request, where the content request at least includes an identifier of requested content; determine whether the content corresponding to the identifier can be acquired locally; if yes, acquire the content corresponding to the identifier locally; otherwise, search a name resolution unit 602a for the location of the content. If the content exists on another node in a local AS, the content is acquired through a storage service module 603. If the content is stored or cached in other systems (with the assistance of a global content resolution structure of the name resolution unit 602a), the content request is initiated to border nodes in the systems; after the content is acquired, the content is returned to all content requesters.

The content proxy module 601 specifically includes: a local cache search unit 601b and an aggregated content search unit 601c. The local cache search unit 601b is configured to determine whether the content corresponding to the identifier is stored in a local cache; and if yes, acquire the content from the local cache; the aggregated content search unit 601c is configured to determine whether the local is acquiring the content corresponding to the identifier; and if yes, acquire the content corresponding to the identifier after the local acquires the content.

Content request aggregation: setting a content information table that is being acquired, so that for a subsequent repeated request (which can be found in the information table according to the name of content) for the same content, there is no need to acquire the content again, but to wait to respond together after the content is returned at a previous request. Through the aggregation of content requests, DDoS and Flash Crowd problems can be prevented effectively.

2. The name resolution unit 602a, which is a core unit in CONA and configured to search, according to a DHT, for a content storage location list corresponding to the identifier, and specifically includes the following functions:

Supporting multiple working ways: adopting a broadcast manner in a local cooperation region or a local area network, similar to an ARP (Address Resolution Protocol, address resolution protocol); adopting a multilevel DHT in an AS or a metropolitan area network; and adopting a global content resolution structure in a cross-AS.

Maintaining key based routing (KBR, Key Based Routing) of the DHT: mainly including the function of discovering a node having a function of name resolution, detecting a state of the node, determining whether the node having the function of name resolution is added into the DHT, synchronizing the state of the KBR, and so on.

Constructing a multilevel DHT: in the CONA, constructing the multiple levels of DHTs in each AS or metropolitan area network to correspond to different levels of network infrastructure, for example, a DSLAM device layer, an Ethernet switch layer and a border router layer.

Supporting a DHT basic operation: supporting write, search and other functions of the DHT, when it is considered that a peer (peer) of the DHT is constituted by a network device in comparatively stable state, one-hop (One-Hop) DHT search may be adopted.

The part that supports the write function of the DHT and is of the name resolution unit 602a is configured to receive a registration request, where the registration request at least includes an identifier of registered content and location information of the registered content; search a current DHT to determine whether the identifier exists; if yes, update a content storage location list corresponding to the identifier and complete the registration; otherwise, add the identifier and the location information of the content, and determine whether the current DHT is a highest-level DHT in a local AS; if no, register with an upper-level DHT in the local AS; and if yes, register with a global content resolution structure.

The part that supports the search function of the DHT and is of the name resolution unit 602a is configured to: search the current DHT to determine whether the identifier of the requested content exists, if the identifier of the requested content exists, acquire the content storage location list corresponding to the identifier; if the identifier of the requested content does not exist and the current DHT is not the highest-level DHT in the local AS, search an upper-level DHT in the local AS until the content storage location list corresponding to the identifier is acquired; if the identifier does not exists in the current DHT, and the current DHT is the highest-level DHT in the local AS, search the global content resolution structure for a home AS of the content corresponding to the identifier, and acquire the content storage location list corresponding to the identifier from a target node in the AS.

Aggregation feature and longest matching search: Structured name space is used in the global content resolution structure, which has the aggregation feature. When names of a batch of content have the same prefix and are published in the same region (for example, the same AS), it is only necessary to publish one record in the global content resolution structure by using the prefix of the names. For example, the pieces of content "www.huawei.com/pic/p1.jpg",..., and "www.huawei.com/pic/pn.jpg" have the same prefix "www.huawei.com/pic/" and are stored in the same AS, and then they may be aggregated into a resolution record with the name "www.huawei.com/pic/" in the global content resolution structure. The aggregation feature greatly improves scalability of the global content resolution structure. Moreover, the global content resolution structure also supports the longest matching search. If two resolution records from different ASs, namely, "www. huawei.com/" and "www.huawei.com/pic/", exist in the global content resolution structure, when the content "www.huawei.com/pic/p1.jpg" is resolved, "www.huawei.com/pic/" may be found.

3. A content routing unit 602b, which specifically includes the following functions:

Logical topology management of nodes: completing the logical topology management among nodes mainly through automatic discovery of the nodes, node fault detection, and other functions.

Automatic optimization routing: performing the automatic optimization routing for a content-layer message from an upper-level storage service module 603, selecting a target node in the request according to an optimization policy delivered by a global navigation device 605, determining a transmission requirement ratio of each target node; and further mapping, through a transmission engine module 606, a transmission requirement to a bottom transmission network 607. Specifically, the content routing unit 602b is configured to select the target node from the content storage location list according to a current traffic engineering - server selection TE-SS policy, and acquire the content corresponding to the identifier from the target node. The content routing unit 602b specifically includes: a receiving subunit 602b1, configured to receive the content storage location list sent by the name resolution unit 602a; a traffic engineering - server selection TE-SS policy acquisition subunit 602b2, configured to acquire a current TE-SS policy; a selection subunit 602b3, configured to select the target node from the content storage location list according to the current TE-SS policy; and a content acquisition subunit 602b4, configured to acquire the corresponding content from the target node according to the current TE-SS policy.

Content transmission and delivery: completing transmission of the content between nodes through an interface provided by the transmission engine module 606.

4. A storage service module 603, which specifically includes the following functions:

DHT index storage: configured to store metadata of the content, including the content storage location list, a data signature, TTL, and other information.

Content block storage: to perform permanent storage and caching of a content block. The caching may be classified into two types: local caching and cooperative caching. The local caching is scheduled through a local cache replacement algorithm; the cooperative caching is a shared virtual cache pool formed by organizing storage capacity of devices in a cooperation region and then cooperating with each other, to improve the overall cache hit rate and the efficiency of content distribution in the cooperation region. It is scheduled through a local caching policy that is acquired by integrating the local information with a cooperative caching global policy that is delivered by a comparatively concentrated cooperative cache controller in the global navigation device 605. Specifically, the storage service module is configured to acquire the cooperative caching global policy, acquire the local caching policy according to the cooperative caching global policy and the local information, and cache the acquired content according to the local caching policy.

Uniform storage service interface: encapsulating basic semantics used for storing content, hiding details of a storage architecture, and providing a uniform content storage service interface for other modules and apparatuses.

5. An application service module 604, which specifically includes the following functions:
generating a user request abstract: receiving, by the application service module 604 of each node in the cooperation region, a content request sent by a user client, and acquiring a user request abstract according to the content request, where the content request sent by the user client includes the name of the content that needs to be acquired; and summarizing content requests, for example, classifying the content requests sent by different user clients and collecting access statistics on different content requests to acquire the user request abstract, where the user request abstract includes, but is not limited to, the name of the content, information about the cooperation region and the access statistics; and reporting the user request abstract to the global navigation device 605.

6. The global navigation device 605, which specifically includes the following functions:
a cooperative cache controller 605a, configured to acquire user profile information and dynamic change of network traffic, and acquire a cooperative caching global policy according to at least one of the user profile information and the dynamic change of the network traffic. Specifically, it uses at least one of the user profile information (the request for content) and the dynamic change of the network traffic in a system as input and acquires a cooperative caching global policy of each system by adopting a cooperative caching method; and pushes the policy to nodes in the system and applies the policy to the storage service module 603; then makes cache resources contributed by nodes in the system cooperate with each other to form a shared virtual cache pool, where the cache resources are obtained after each of the nodes in the system contributes part of cache resources.

The cooperative caching method commonly used is to build, based on the statistical prediction of content popularity, an optimization problem model with minimum network transmission cost, and to address this optimization problem through the heuristic algorithm to acquire copy placement and replacement policies that are closest to the optimal. In this embodiment of the present invention, the copy placement and replacement policies for cooperative caching may adopt the above method, but other methods are not excluded.

A joint optimization controller 605b: configured to acquire the user profile information and the dynamic change of the network traffic, and calculate a TE-SS policy according to the user profile information and the dynamic change of the network traffic. Specifically, it uses the user profile information (the request for the content) and the dynamic change of the network traffic in the system as input, regularly calculates the "TE-SS" policy (for example, change IP routing) by adopting an optimization partition theory, and pushes the policy to nodes in the system.

A TE-SS joint optimization method is to make use of the cooperative game theory to realize the cooperative game for the optimization of both TE and SS, so that both the problem of the optimal routing of the network traffic and the problem of the high efficiency of content distribution are solved, and the global optimization of system performance is achieved. A typical TE-SS joint optimization method is to build the COST of the TE-SS by using the NBS. By using the dual decomposition theory, the COST decomposes an initial joint optimization problem into two sub optimization problems that are similar to the TE and SS, and a main optimization problem. The two sub problems are correlated through a common dual variable, and the main problem is to continuously update a related dual variable to make a system approach an optimal solution. In this embodiment of the present invention, joint optimization may adopt the COST method, but other methods are not excluded, so this embodiment of the present invention does not impose limitation thereon.

Specifically, user profile analysis is also included: analyzing the user request abstract reported by an application service module 604. The user profile information output may be fed back to a cooperative cache controller and a joint optimization controller, and may also be used by another application program, for example, recommendation; where
the user profile analysis (User Profile Analysis) refers to: analyzing the profile of the access history of a user, predicting the access preference of the user for specific content according to the user profile information that is obtained according to an analysis result, and acquiring the personal preference of the user according to the access preference for specific content. For example, through the analysis on history access data of user A, it is found out that the user A prefers to access golf, basketball and sports news, and therefore the personal preference of the user A is sports.

Prediction methods commonly used include memory based collaborative filtering (Memory Based Collaborative Filtering) and model based collaborative filtering (Model Based Collaborative Filtering). For the memory based collaborative filtering, the access preference of a user for specific content is predicted by calculating the similarity among users and the comments of other users on the content. For the model based collaborative filtering, a probability model is established for a user first, and a parameter corresponding to the probability model of the user is acquired based on the history access data of the user and by adopting the statistical inference and Bayesian learning method, and with this user model, the specific content is predicted according to the parameter, to acquire the access preference of the user for the specific content.

This embodiment of the present invention does not limit the method for the user profile analysis, the method may be the memory based collaborative filtering or the model based collaborative filtering, and other methods are not excluded.

7. A transmission engine module 606, specifically including the following functions:

Transmission control tasks of the node 600 for acquiring content that are irrelevant to a bearing technology: for example, retransmitting a request message of the node 600 for acquiring content; discarding a repeated response message in the node 600 for acquiring content, performing traffic control on the request message received by the node 600 for acquiring content, and so on.

Adaptation of different bearing technologies between the node 600 for acquiring content and the transmission network 607: completing the adaptation of different bearing technologies, such as IP, Ethernet, MPLS, Fiber or Wireless. The differences between transmission technologies are hidden to provide a uniform transmission interface for the node 600 for acquiring content, so as to complete tasks, such as fragmentation, reorganization, and reordering between the content and packets or frames of a transport layer.

Optimization for a specific bearing technology: For example, in a metropolitan area network, the CONA may directly employ the Ethernet to perform transmission, and perform optimization in view of the characteristics of the Ethernet to address a scalability issue, so as to maximize the efficiency of using a network by the CONA.

Topological perception on a bearer network and control on a transmission path: completing dynamic detection on the topology of the bearer network and traffic information by extending BGP, IS-IS or another protocol, and completing the joint optimization objective of a TE-SS policy by controlling a transmission path through which content is sent by a target node.

Moreover, the content network provided by this embodiment of the present invention further includes the transmission network 607, configured to provide the content network with a platform used for transmitting the content. This embodiment of the present invention does not restrict the form of the transmission network 607, and the form of the transmission network 607 includes, but is not limited to, IP, Ethernet, (G) MPLS, Fiber, and Wireless.

The content proxy module 601, the name resolution unit 602a, the content routing unit 602b, the storage service module 603, the application service module 604, the global navigation device 605, and the transmission engine module 606 are independent physical devices, or any combination of them is located in the same physical device, or each of the modules or units performs an individual process in one physical device, or the modules or units together perform one process in one physical device.

The global navigation device 605 may be arranged in the node 600 for acquiring content or may be an independent device.

The storage service module 603 may be integrated in one physical device, and is responsible for storing at least one of a content block a DHT index, so as to form a storage-only device in the CONA.

The name resolution unit 602a and the storage service module 603 (which only needs to store the index) may be integrated in one physical device, undertake the storage and search of the name resolution entries of content, so as to form a name-resolution-only device in the CONA.

The above modules and apparatuses may be combined flexibly according to requirements of operators, to construct different device patterns, including:

In actual deployment, the hybrid topologies of patterns of the modules and devices are allowed. This makes the topology more flexible and better in scalability. For example, when the service processing capability is not enough, the number of the integrated service switching devices only needs to be increased. If the content storage capacity only needs to be expanded, the storage-only device may be added directly. When the processing capability of a name resolution system needs to be improved, the name-resolution-only device may be added directly.

The technical solution provided in this embodiment of the present invention makes full use of the advanced distributed computing and optimization decomposition theory, builds the network architecture that performs perception, storage, routing and distribution on the content, uses cross-layer joint optimization or other technologies, to solve problems that the existing Internet of the host-based model is facing. In this way, a new generation network that is highly scalable and efficient, and content storage/distribution centric is provided.

Under the network architecture according to this embodiment of the present invention, the content is not stored in a specific node. When the client is to acquire certain content, the client does not acquire it from a specific node, but searches for the content in a local cache. If there is no such content in the local, the client searches the DHT for the content storage location list corresponding to the identifier of the content and acquires the corresponding target node in the content storage location list to acquire the content. By adopting the method according to this embodiment of the present invention, network congestion caused by a situation in which many clients acquire certain content at the same time is avoided. Meanwhile, the efficiency of content distribution is improved and the waste on the investment cost for upgrading a network device is reduced. A case in which a hacker paralyzes the network by sending a large number of content requests to the same node is prevented, and network security is improved.

Other than a case in which each node stores all DHTs, DHTs in a cooperation region are dispersedly stored by multiple nodes in the cooperation region; therefore, when the content explodes, the storage pressure of each node is alleviated, having distributed and scalable features.

Because a cooperative distributed caching system is constructed by organizing the storage capacity of all nodes in the cooperation region, the acquisition of the content is not limited to the cache of a single node, thereby improving storage scalability. By employing the local caching policy generated by integrating the current cooperative caching global policy with the local information, the scheduling is performed on local cache resources and cooperative cache resources, thereby improving the overall cache hit rate and the efficiency of content distribution in the cooperation region.

The target node is selected from the content storage location list according to the SS policy in the current TE-SS policy, and dynamic optimization routing is performed according to the TE policy in the current TE-SS policy, so that the user client can acquire the content from an optimal node through an optimal path.

Because of the adoption of the structured name space with the aggregation feature, the system scalability is greatly improved.

It should be noted that: when the node for acquiring content and the content network according to the embodiments are acquiring the content, the allocation of the above function modules is just exemplarily illustrated. In an actual application, according to requirements, the above functions may be allocated to different function modules for completion, that is, internal structures of the node for acquiring content and the content network are classified into different function modules, to implement all or part of the functions described above. In addition, the node for acquiring content, the content network and the method for acquiring content according to the embodiments belong to the same conception, so for the specific implementation, reference can be made to the method embodiments, and details are not repeated herein.

The sequence numbers of the preceding embodiments of the present invention are only for ease of description, but do not denote the preference of the embodiments.

All or part of the steps according to the embodiments of the present invention may be implemented by using software, and the corresponding software programs may be stored in a readable storage medium, such as a compact disk or a hard disk.

The above are merely exemplary embodiments of the present invention, but are not intended to limit the present invention. Variations, replacements, or improvements made without departing from the idea and principle of the present invention shall fall within the protection scope of the present invention.

## Claims

1. A method for acquiring content, comprising:
receiving a content request, wherein the content request at least comprises an identifier of requested content;
determining whether the content corresponding to the identifier can be acquired locally; if yes, acquiring the content corresponding to the identifier locally; otherwise,
searching, according to the identifier, a name resolution system for a target node that stores the content corresponding to the identifier, and acquiring the content corresponding to the identifier from the target node;
wherein the name resolution system comprises a multilevel distributed hash table DHT and a global content resolution structure, and the global content resolution structure supports name aggregation and longest matching search.

2. The method according to claim 1, wherein, the determining whether the content corresponding to the identifier can be acquired locally; if yes, acquiring the content corresponding to the identifier locally, comprises:
determining whether the content corresponding to the identifier is stored in a local cache; if yes, acquiring the content form the local cache; otherwise,
determining whether a local is acquiring the content corresponding to the identifier; if yes, acquiring the content corresponding to the identifier after the local acquires the content.

3. The method according to claim 1, wherein the searching, according to the identifier, the name resolution system for the target node that stores the content corresponding to the identifier comprises:
searching, according to the multilevel distributed hash table DHT, for a content storage location list corresponding to the identifier, and selecting the target node from the content storage location list according to a current traffic engineering - server selection TE-SS policy.

4. The method according to claim 3, wherein the searching, according to the multilevel distributed hash table DHT, for the content storage location list corresponding to the identifier, comprises:
searching a current DHT to determine whether a resolution record corresponding to the identifier exists; if the resolution record corresponding to the identifier exists, acquiring the content storage location list in the resolution record corresponding to the identifier;
if the resolution record corresponding to the identifier does not exists and the current DHT is not a highest-level DHT in a local autonomous system AS, searching an upper-level DHT in the local AS until the content storage location list in the resolution record corresponding to the identifier is acquired.

5. The method according to claim 3, wherein the selecting the target node from the content storage location list according to the current traffic engineering - server selection TE-SS policy, comprises:
acquiring the current TE-SS policy; and
selecting the target node from the content storage location list according to the current TE-SS policy; and
the acquiring, from the target node, the content corresponding to the identifier, comprises:
acquiring the content corresponding to the identifier from the target node according to the current TE-SS policy.

6. The method according to claim 5, wherein, before the acquiring the current TE-SS policy, the method further comprises:
acquiring a user request abstract and dynamic change of network traffic;
acquiring user profile information according to the user request abstract; and
acquiring the TE-SS policy according to the user profile information and the dynamic change of the network traffic.

7. The method according to claim 1, wherein the searching, according to the identifier, the name resolution system for the target node that stores the content corresponding to the identifier comprises:
searching the global content resolution structure for a home autonomous system AS of the content corresponding to the identifier, and acquiring the content corresponding to the identifier from the target node in the AS.

8. The method according to claim 1, further comprising:
receiving a registration request, wherein the registration request at least comprises the identifier of the content and location information of the content;
searching a current DHT to determine whether a resolution record corresponding to the identifier exists; if the resolution record corresponding to the identifier exists, updating a content storage location list in the resolution record corresponding to the identifier;
otherwise, adding a resolution record comprising the identifier and the location information of the content to the DHT, and determining whether the current DHT is a highest-level DHT in a local autonomous system AS; if no, registering with an upper-level DHT in the local AS; if yes, registering with the global content resolution structure.

9. The method according to claim 1, wherein after the acquiring the content corresponding to the identifier from the target node, the method further comprises:
acquiring a cooperative caching global policy and local information;
acquiring a local caching policy according to the cooperative caching global policy and the local information; and
caching the content according to the local caching policy.

10. The method according to claim 9, wherein before the acquiring the cooperative caching global policy, the method further comprises:
acquiring a user request abstract;
acquiring user profile information according to the user request abstract; and
acquiring the cooperative caching global policy according to the user profile information.

11. The method according to claim 9, wherein before the acquiring the cooperative caching global policy, the method further comprises:
acquiring dynamic change of network traffic; and
acquiring the cooperative caching global policy according to the dynamic change of the network traffic.

12. The method according to claim 9, wherein before the acquiring the cooperative caching global policy, the method further comprises:
acquiring a user request abstract and dynamic change of network traffic;
acquiring user profile information according to the user request abstract; and
acquiring the cooperative caching global policy according to the user profile information and the dynamic change of the network traffic.

13. The method according to claims 6, 10 or 12, wherein the acquiring the user request abstract comprises:
acquiring a content request of a user, and acquiring the user request abstract according to the content request.

14. Anode for acquiring content, comprising:
a content proxy module, configured to receive a content request, wherein the content request at least comprises an identifier of requested content; determine whether the content corresponding to the identifier can be acquired locally; if yes, acquire the content corresponding to the identifier locally; otherwise, forward the content request to a content acquisition module; and
the content acquisition module, configured to receive the content request forwarded by the content proxy module, search, according to the identifier, a name resolution system for a target node that stores the content corresponding to the identifier, and acquire the content corresponding to the identifier from the target node;
wherein the name resolution system comprises a multilevel distributed hash table DHT and a global content resolution structure, and the global content resolution structure supports name aggregation and longest matching search.

15. The node according to claim 14, wherein the content acquisition module comprises:
a request receiving unit, configured to receive the content request, wherein the content request at least comprises the identifier of the requested content, and send the content request to a local cache search unit;
the local cache search unit, configured to receive the content request sent by the request receiving unit, and determine whether the content corresponding to the identifier is stored in a local cache; if yes, acquire the content from the local cache; otherwise, forward the content request to an aggregated content search unit; and
the aggregated content search unit, configured to receive the content request forwarded by the local cache search unit, and determine whether the local is acquiring the content corresponding to the identifier; if yes, acquire the content corresponding to the identifier after the local acquires the content; if no, forward the content request to the content acquisition module.

16. The node according to claim 14, wherein the content acquisition module comprises:
a name resolution unit, configured to receive the content request sent by the content proxy module, search, according to the multilevel distributed hash table DHT, for a content storage location list corresponding to the identifier, and send the content storage location list to a content routing unit; and
the content routing unit, configured to receive the content storage location list sent by the name resolution unit, select the target node from the content storage location list according to a current traffic engineering - server selection TE-SS policy, and acquire the content corresponding to the identifier from the target node.

17. The node according to claim 16, wherein the name resolution unit comprises:
a request receiving subunit, configured to receive the content request sent by the content proxy module;
a search subunit, configured to search a current DHT to determine whether a resolution record corresponding to the identifier exists; if the resolution record corresponding to the identifier exists, acquire the content storage location list in the resolution record corresponding to the identifier; if the resolution record corresponding to the identifier does not exist and the current DHT is not a highest-level DHT in a local autonomous system AS, search an upper-level DHT in the local AS until the content storage location list in the resolution record corresponding to the identifier is acquired; and
a sending subunit, configured to send the content storage location list to the content routing unit.

18. The node according to claim 17, wherein the name resolution unit further comprises:
a registration subunit, configured to receive a registration request, wherein the registration request at least comprises the identifier of the content and location information of the content; and search the current DHT to determine whether the resolution record corresponding to the identifier exists;
if the resolution record corresponding to the identifier exists, update the content storage location list in the resolution record corresponding to the identifier;
otherwise, add a resolution record comprising the identifier and the location information of the content to the DHT, and determine whether the current DHT is the highest-level DHT in the local autonomous system AS; if no, register with the upper-level DHT in the local AS; if yes, register with the global content resolution structure.

19. The node according to claim 16, wherein the content routing unit comprises:
a receiving subunit, configured to receive the content storage location list sent by the name resolution unit and send the content storage location list to a selection subunit;
a traffic engineering - server selection TE-SS policy acquisition subunit, configured to acquire the current TE-SS policy and send the current TE-SS policy to the selection subunit;
the selection subunit, configured to receive the content storage location list sent by the receiving subunit and the current TE-SS policy sent by the TE-SS policy acquisition subunit, select the target node from the content storage location list according to the current TE-SS policy, and send information about the target node to a content acquisition subunit; and
the content acquisition subunit, configured to receive the information about the target node sent by the selection subunit and acquire the content corresponding to the identifier from the target node according to the current TE-SS policy.

20. The node according to claim 14, wherein the content acquisition module is configured to search the global content resolution structure for a home autonomous system AS of the content corresponding to the identifier, and acquire the content corresponding to the identifier from the target node in the AS.

21. The node according to claim 14, wherein the node further comprises:
a storage service module, configured to acquire a cooperative caching global policy and local information, acquire a local caching policy according to the cooperative caching global policy and the local information, and cache the content according to the local caching policy.

22. The node according to claim 14, wherein the node further comprises:
an application service module, configured to acquire a content request of a user, acquire a user request abstract according to the content request, and send the user request abstract to a global navigation device.

23. The node according to claim 14, wherein the node further comprises:
a global navigation device, wherein the global navigation device comprises a cooperative cache controller, configured to acquire a user request abstract sent by an application service module, acquire user profile information according to the user request abstract, and acquire a cooperative caching global policy according to the user profile information.

24. The node according to claim 14, wherein the node further comprises:
a global navigation device, wherein the global navigation device comprises a cooperative cache controller, configured to acquire dynamic change of network traffic and acquire a cooperative caching global policy according to the dynamic change of the network traffic.

25. The node according to claim 14, wherein the node further comprises:
a global navigation device, wherein the global navigation device comprises a cooperative cache controller, configured to acquire a user request abstract sent by an application service module and dynamic change of network traffic, acquire user profile information according to the user request abstract, and acquire a cooperative caching global policy according to the user profile information and the dynamic change of the network traffic.

26. The node according to claim 14, wherein the node further comprises:
a global navigation device, wherein the global navigation device comprises a joint optimization controller, configured to acquire a user request abstract sent by an application service module and dynamic change of network traffic, acquire user profile information according to the user request abstract, and acquire a TE-SS policy according to the user profile information and the dynamic change of the network traffic.

27. A content network, wherein the network comprises a node for acquiring content and a transmission network; and
the node for acquiring content is configured to receive a content request, wherein the content request at least comprises an identifier of requested content; determine whether the content corresponding to the identifier can be acquired locally; if yes, acquire the content corresponding to the identifier locally; otherwise, search, according to the identifier, a name resolution system for a target node that stores the content corresponding to the identifier, and acquire the content corresponding to the identifier from the target node; and send the content corresponding to the identifier to a client through the transmission network;
wherein the name resolution system comprises a multilevel distributed hash table DHT and a global content resolution structure, and the global content resolution structure supports name aggregation and longest matching search.

28. The network according to claim 27, wherein when the node for acquiring content is configured to determine whether the content corresponding to the identifier can be acquired locally; and if yes, acquire the content corresponding to the identifier locally,
the node for acquiring content is specifically configured to determine whether the content corresponding to the identifier is stored in a local cache; if yes, acquire the content from the local cache; otherwise, determine whether the local is acquiring the content corresponding to the identifier, and if yes, acquire the content corresponding to the identifier after the local acquires the content.

29. The network according to claim 27, wherein, when the node for acquiring content is configured to search, according to the identifier, the name resolution system for the target node that stores the content corresponding to the identifier,
the node for acquiring content is specifically configured to search, according to the multilevel distributed hash table DHT, for a content storage location list corresponding to the identifier, and select the target node from the content storage location list according to a current traffic engineering - server selection TE-SS policy.

30. The network according to claim 29, wherein, when the node for acquiring content is configured to search, according to the multilevel distributed hash table DHT, for the content storage location list corresponding to the identifier,
the node for acquiring content is specifically configured to search a current DHT to determine whether a resolution record corresponding to the identifier exists; if the resolution record corresponding to the identifier exists, acquire the content storage location list in the resolution record corresponding to the identifier; if the resolution record corresponding to the identifier does not exist and the current DHT is not a highest-level DHT of a local autonomous system AS, search an upper-level DHT in the local AS until the content storage location list in the resolution record corresponding to the identifier is acquired.

31. The network according to claim 27, wherein the node for acquiring content is further configured to receive a registration request, wherein the registration request at least comprises the identifier of the content and location information of the content; search a current DHT to determine whether a resolution record corresponding to the identifier exists; if the resolution record corresponding to the identifier exists, update a content storage location list in the resolution record corresponding to the identifier; otherwise, add a resolution record comprising the identifier and the location information of the content to the DHT, and determine whether the current DHT is a highest-level DHT in a local autonomous system AS; if no, register with an upper-level DHT in the local AS; and if yes, register with the global content resolution structure.

32. The network according to claim 29, wherein, when the node for acquiring content is configured to select the target node from the content storage location list according to the current traffic engineering - server selection TE-SS policy,
the node for acquiring content is specifically configured to acquire the current TE-SS policy and select the target node from the content storage location list according to the current TE-SS policy; and
When the node for acquiring content is configured to acquire the content corresponding to the identifier from the target node, the node for acquiring content is specifically configured to acquire the content corresponding to the identifier from the target node according to the current TE-SS policy.

33. The network according to claim 27, wherein, when the node for acquiring content is configured to search, according to the identifier, the name resolution system for the target node that stores the content corresponding to the identifier, and acquire the content corresponding to the identifier from the target node,
the node for acquiring content is specifically configured to search the global content resolution structure for a home autonomous system AS of the content corresponding to the identifier, and acquire the content corresponding to the identifier from the target node in the AS.

34. The network according to claim 27, wherein, after the node for acquiring content is configured to acquire the content corresponding to the identifier from the target node, the node for acquiring content is further configured to acquire a cooperative caching global policy and local information, acquire a local caching policy according to the cooperative caching global policy and the local information, and cache the content according to the local caching policy.

35. The network according to claim 27, wherein, the node for acquiring content is further configured to acquire a content request of a user, acquire a user request abstract according to the content request, and send the user request abstract to a global navigation device.

36. The network according to claim 27, wherein the node for acquiring content further comprises:
a global navigation device, configured to acquire a user request abstract, acquire user profile information according to the user request abstract, and acquire a cooperative caching global policy according to the user profile information.

37. The network according to claim 27, wherein the node for acquiring content further comprises:
a global navigation device, configured to acquire dynamic change of network traffic and acquire a cooperative caching global policy according to the dynamic change of the network traffic.

38. The network according to claim 27, wherein the node for acquiring content further comprises:
a global navigation device, configured to acquire a user request abstract and dynamic change of network traffic, acquire user profile information according to the user request abstract, and acquire a cooperative caching global policy according to the user profile information and the dynamic change of the network traffic.

39. The network according to claim 27, wherein the node for acquiring content further comprises:
a global navigation device, configured to acquire dynamic change of network traffic and a user request abstract, acquire user profile information according to the user request abstract, and acquire a TE-SS policy according to the user profile information and the dynamic change of the network traffic.

40. The network according to claims 36 to 39, wherein the global navigation device is arranged on the node for acquiring content or is an independent device.
